# EUROPÄISCHE PATENTSCHRIFT

(11) **EP 2 033 844 B1**
(45) Veröffentlichungstag und Bekanntmachung des Hinweises auf die Patenterteilung: **15.08.2012**
(21) Anmeldenummer: 08011523.1
(22) Anmeldetag: 25.06.2008
(51) Int. Cl.: B60R 7/06, B60R 11/00

(54) **Kraftfahrzeug-Innenverkleidungsteil mit einem Stauraum**
Motor vehicle interior décor component with storage space
Pièce d'habillage intérieure pour véhicule automobile dotée d'une chambre d'accumulation

(30) Priorität: 05.09.2007 DE 102007042134
(43) Veröffentlichungstag der Anmeldung: 11.03.2009
(73) Patentinhaber: GM Global Technology Operations LLC, Detroit, MI 48265-3000 (US)
(72) Erfinder: Ahlburg, Ralf, 67294 Gauersheim (DE)
(74) Vertreter: Strauss, Peter

(56) Entgegenhaltungen:
- FR-A1- 2 810 936
- FR-A1- 2 850 329
- JP-A- 6 048 237
- US-A- 5 823 599

## Beschreibung

Die Erfindung betrifft ein Kraftfahrzeug-Innenverkleidungsteil mit einem Stauraum. Bei dem Kraftfahrzeug-Innenverkleidungsteil handelt es sich z. B. um eine Instrumententafel, einen Handschuhkasten oder eine Mittelkonsole.

Insassen von Kraftfahrzeugen, insbesondere von Personenkraftwagen, erwarten im Innenraum des Fahrzeugs ausreichend Stauraum, beispielsweise um kleinere Utensilien dort ablegen zu können. Hierbei ist es von Vorteil, wenn unterschiedliche Teilstauräume gebildet sind, so dass die Utensilien separat aufbewahrt werden können.

Aus der DE 10 2004 063 138 A1 ist ein Kraftfahrzeug-Innenverkleidungsteil mit einem Stauraum bekannt, wobei in dem Innenverkleidungsteil mehrere Staufächer um eine gemeinsame Achse drehbar angeordnet sind. Die Staufächer bleiben bei Drehung um die Achse in einer horizontalen Position. Zum bewerkstelligen dieser komplizierten Bewegung ist einerseits eine Lagerung der diversen Staufächer in einem gemeinsamen drehbaren Lagerteil erforderlich, ferner die drehbare Lagerung des einzelnen Staufachs im Lagerteil. Bei einer Vielzahl von Staufächern sind nur die dem Fahrzeuginsassen zugewandten Staufächer zugänglich, während die anderen Staufächer vom Innenverkleidungsteil, insbesondere einer Instrumententafel abgedeckt sind.

Nachteilig ist bei dieser Gestaltung der hohe Konstruktions-, Fertigungs- und Montageaufwand zur Schaffung des Stauraums im Kraftfahrzeug-Innenverkleidungsteil. Abgesehen hiervon ist eine große Öffnung notwendig, um den Zugang zu den dem Insassen zugewandten Staufächern zu ermöglichen.

In der DE 20 2005 005 226 U1 ist eine Ablageschale zur Verwendung bei einem Kraftfahrzeug beschrieben. Sie weist mindestens zwei aneinander angrenzende, sich zu der kreisförmigen, drehbaren Ablageschale ergänzende, etwa halbkreisförmige, nach oben offene Schalenbereiche auf. Jeweils die Öffnung eines Schalenbereiches ist in der Gebrauchslage zugänglich, während die Öffnung des zweiten Schalenbereichs durch Wandungsteile oder Verkleidungsteile abgedeckt ist. Ein derart gebildeter Stauraum hat nur eine geringe Tiefe und es ist dem Fahrzeuginsasse der kreissektorförmige Teilstauraum zugewandt, mit dessen recht großer axialen Öffnung. Ein solches Einbauteil ist aufgrund dessen konstruktiver Gestaltung nicht geeignet, in Bereichen des Fahrzeugs verwendet zu werden, in denen nur Platz für eine relativ kleine Öffnung zum Stauraum bereitgestellt werden kann.

Ein Kraftfahrzeug-Innenverkleidungsteil mit einem Stauraum, dass gemäß den Merkmalen des Oberbegriffs des Patentanspruchs 1 ausgebildet ist, ist aus der US 5,823,599 A bekannt. Bei diesem sind die Wandungsabschnitte des Unterteilungselementes im Bereich deren dem Hohlzylinder zugewandten Ende stumpf ausgebildet, so dass ein Spalt zwischen Wandungsabschnitt und Hohlzylinder gebildet ist.

Aus der FR 2 810 936 A1 ist ein Kraftfahrzeug-Innenverkleidungsteil mit einem Stauraum bekannt, wobei der Stauraum durch das Innere eines Hohlzylinders gebildet ist. Der Hohlzylinder ist um eine waagrecht angeordnete Achse drehbar und weist ein Unterteilungselement zur Bildung zweier Kammern auf. Jede Kammer ist mittels einer einen Teilbereich des Hohlzylinders bildenden, gelenkig im anderen Mantelbereich des Hohlzylinders gelagerten Klappe verschließbar.

Weitere Kraftfahrzeug-Innenverkleidungsteile mit einem durch einen Hohlzylinder gebildeten Stauraum sind aus der JP 6 048237 A und der FR 2 850 329 A1 bekannt.

Aufgabe der vorliegenden Erfindung ist es, ein Kraftfahrzeug-Innenverkleidungsteil gemäß dem Oberbegriff des Patentanspruchs 1 so weiterzubilden, dass im jeweiligen Teilstauraum befindliche Utensilien, die beim Drehen des Unterteilungselements entlang der Innenwandung des Hohlzylinders gefördert werden, nicht zu einer Blockierung des Hohlzylinders bei dessen Drehung führen.

Zur Lösung dieser Aufgabe schlägt die Erfindung ein Kraftfahrzeug-Innenverkleidungsteil mit einem Stauraum vor, das gemäß den Merkmalen des Patentanspruchs 1 ausgebildet ist.

Da die im jeweiligen Teilstauraum befindlichen Utensilien beim Drehen des Unterteilungselements entlang der Innenwandung des Hohlzylinders gefördert werden, insbesondere beim Fördern der Utensilien nach oben, ist somit erfindungsgemäß vorgesehen, dass das Unterteilungselement im Bereich seiner dem Hohlzylinder zugewandten Endbereiche mit die Spalte zwischen Hohlzylinder und Unterteilungselement überbrückenden Abstreifereinrichtungen versehen ist. Diese sind insbesondere in Drehrichtung des Unterteilungselements vorlaufend angeordnet. Hierdurch wird verhindert, dass schmale und/oder kleinteilige Utensilien in einen gewissen Spalt zwischen Unterteilungselement und Hohlzylinder gelangen und hierdurch das Unterteilungselement bezüglich des Hohlzylinders blockieren.

Je nach Gestaltung des drehbaren, im Hohlzylinder gelagerten Unterteilungselements lässt sich eine mehrfache Unterteilung des im Hohlzylinder gebildeten Stauraums in Teilstauräume erreichen. Vorzugsweise ist das Unterteilungselement so gestaltet, dass zwei Teilstauräume gebildet werden, die im Wesentlichen gleich groß sind. In diesem Fall ist das Unterteilungselement bevorzugt so ausgebildet, dass die beiden Wandungsabschnitte miteinander einen Winkel von 180° einschließen. Bei waagerecht angeordnetem Unterteilungselement ist somit in diesem Fall ein oberer Teilstauraum und ein unterer Teilstauraum gebildet, die exakt übereinander liegen. Da der Hohlkörper oberhalb dessen Achse die radiale Öffnung aufweist, ist in diesem Fall nur der obere Teilstauraum zugänglich. In dieser Position können durch die Öffnung im Hohlzylinder Utensilien in den diese Öffnung zugewandten Teilstauraum eingelegt bzw. aus diesem Teilstauraum entnommen werden. Ist es gewünscht, Utensilien aus dem unteren Teilstauraum zu entnehmen, wird das Unterteilungselement gedreht, bei zwei identischen Teilstauräumen um 180°, so dass nunmehr die im jetzt oberen Teilstauraum befindlichen Utensilien durch die radiale Öffnung im Hohlzylinder ergriffen werden können, während die anderen Utensilien, die sich zuvor im oberen Bereich des Hohlzylinders befanden, nunmehr sich im unteren Bereich des Hohlzylinders befinden.

Die Erfindung schafft bei einer Kraftfahrzeug-Innenverkleidungsteil einen baulich einfach gestalteten Stauraum, der funktionell ist und überdies es ermöglicht, bei oberhalb dessen Achse liegender radialer Öffnung in der Tiefe einen relativ großen Stauraum zu schaffen.

Das Verschwenken des Unterteilungselements kann manuell oder mittels eines Antriebs, insbesondere eines elektrischen Antriebs erfolgen. Hierzu weist das Unterteilungselement vorzugsweise eine zentrale Welle auf, die angetrieben wird.

Von besonderem Vorteil ist es, wenn die radiale Öffnung des Hohlzylinders ein großes Längen-Breiten-Verhältnis aufweist, wobei die Öffnung, bezogen auf ihre Längserstreckung, parallel zur Achse des Hohlzylinders angeordnet ist. Die Länge der radialen Öffnung entspricht zweckmäßig der Länge des Hohlzylinders. Hierdurch ist eine Öffnung im Hohlzylinder gebildet, die sich über die ganze Länge des Hohlzylinders erstreckt. Diese Gestaltung begünstigt das Einlegen von Utensilien in den jeweils oben liegenden Teilstauraum bzw. des Entnehmen der Utensilien aus diesem. Insbesondere beträgt das Längen-Breiten-Verhältnis der radialen Öffnung des Hohlzylinders mindestens 2:1, maximal 5:1.

Das Kraftfahrzeug-Innenverkleidungsteil kann zusätzlich so weiter gebildet sein, dass im Hohlkörper, benachbart dessen radialer Öffnung, eine Klappe zum Verschließen der Öffnung schwenkbar oder verschieblich gelagert ist.

Weitere Merkmale der Erfindung sind in den Unteransprüchen, der Beschreibung der Zeichnung und der Zeichnung selbst dargestellt, wobei bemerkt wird, dass alle Einzelmerkmale und alle Kombinationen von Einzelmerkmalen weitere erfinderische Ausgestaltungen darstellen.

Eine bevorzugte Ausführungsform ist nachfolgend unter Hinweis auf die Zeichnung näher erläutert. Es zeigt:
- Figur 1: eine räumliche Ansicht, schräg von oben und hinten gesehen, eines Kraftfahrzeug-Innenverkleidungsteils, das als Mittelkonsole eines Personenkraftwagens ausgebildet ist, mit dem erfindungsgemäßen Stauraum,
- Figur 2: einen Schnitt durch den Stauraum, senkrecht zur Achse des Hohlzylinders geschnitten, wobei Bereiche der Mittelkonsole mitveranschaulicht - gleichfalls geschnitten - sind.

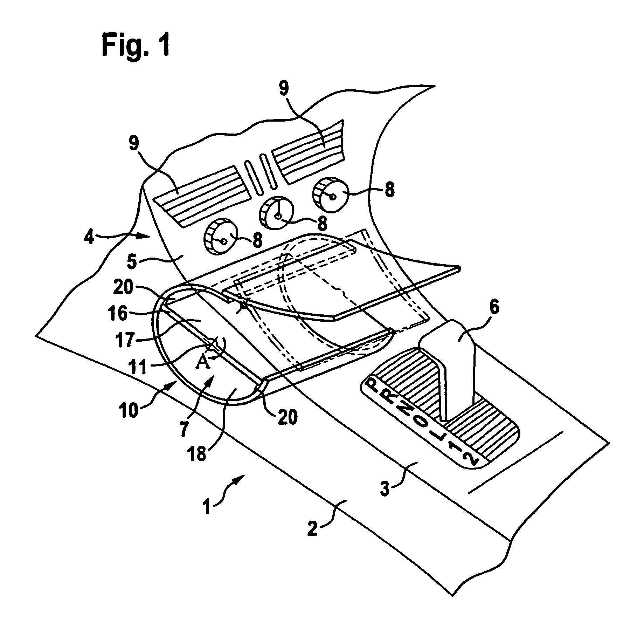

Figur 1 zeigt die Mittelkonsole 1 eines Personenkraftwagens, mit einem zwischen den Frontsitzen befindlichen Konsolenabschnitt 2, der eine im Wesentlichen horizontal angeordnete obere Fläche 3 besitzt sowie mit einem sich vorne an den Konsolenabschnitt 2 anschließenden Konsolenabschnitt 4, der eine von der oberen Fläche 3 ausgehend schräg nach oben gerichtete obere Fläche 5 aufweist. Im Bereich der oberen Fläche 3 des Konsolenabschnitts 2 befindet sich ein Wählhebel 6 eines Automatikgetriebes. Der Konsolenabschnitt 4 nimmt, angrenzend an den Konsolenabschnitt 2, den erfindungsgemäßen Stauraum 7 auf. Oberhalb des Stauraums 7, somit auf der dem Konsolenabschnitt 2 abgewandten Seite des Stauraums 7, sind Betätigungsknöpfe 8, beispielsweise für ein Innenbelüftungssystem des Fahrzeugs angeordnet. Darüber weist der Konsolenabschnitt 4 Luftaustrittsschlitze 9 auf.

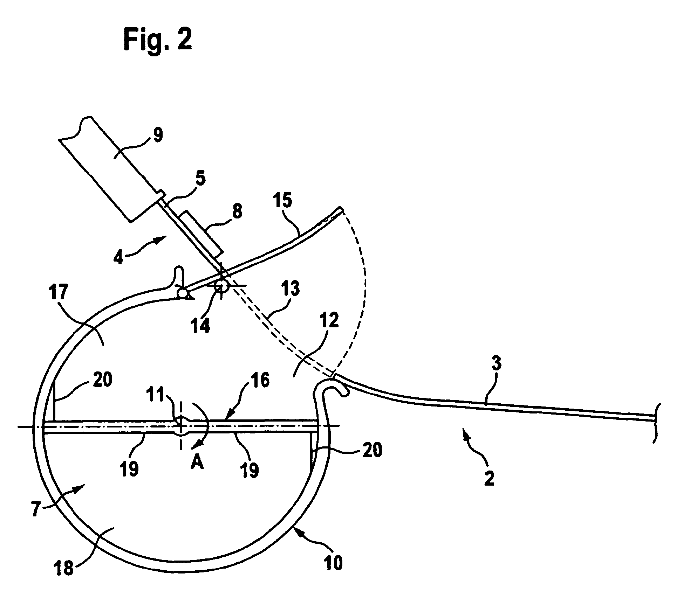

Wie insbesondere der Darstellung der Figur 2 zu entnehmen ist, ist der Stauraum 7 durch das Innere eines Hohlzylinders 10 gebildet, dessen Achse 11 waagerecht angeordnet ist. Mittels nicht gezeigter parallel zueinander und senkrecht zur Achse 11 angeordneter Enden ist der Hohlzylinder 10 geschlossen. Der stationär, somit nicht drehbar in der Mittelkonsole 1 gelagerte Hohlzylinder 10 weist oberhalb dessen Achse 11 eine radiale Öffnung 12 auf, derart, dass diese Öffnung 12 durch eine entsprechend ausgebildete benachbarte Öffnung 13 in der oberen Fläche 5 des Konsolenabschnitts 4, die zwischen dem Konsolenabschnitt 2 und den Betätigungsknöpfen 8 angeordnet ist, zugänglich ist. Diese Öffnung 13 ist mittels eine um eine Achse 14 schwenkbaren Klappe 15 verschließbar. Diese Klappe 15 ist in ihrer die Öffnung 13 freigebenden Stellung mit durchgezogener Linie und in ihrer die Öffnung 13 abdeckenden Position mit strichlierter Linie veranschaulicht.

Innerhalb des Hohlzylinders 10 ist ein Unterteilungselement 16 angeordnet, dass das Innere des Hohlzylinders 10 in zwei Teilstauräume - Teilstauraum 17 und Teilstauraum 18 - unterteilt. Das Unterteilungselement 16 ist um die Achse 14 des Hohlzylinders 10 drehbar. Die Wandungsabschnitte 19 des Unterteilungselements 16 reichen radial bis zum Hohlzylinder 10 und axial bis zu den Enden des Hohlzylinders 10.

Das Unterteilungselement 16 ist so ausgebildet, dass die beiden Wandungsabschnitte 19 plattenförmig gestaltet sind und einen Winkel von 180° einschließen. Demzufolge sind die beiden Teilstauräume 17 bzw. 18 im Wesentlichen gleich groß.

Die radiale Öffnung 13 weist ein großes Längen-Breiten-Verhältnis auf, beispielsweise ein solches von mindestens 2:1, maximal 5:1 und es ist insbesondere die Öffnung 12, bezogen auf ihre Längserstreckung, parallel zur Achse 11 des Hohlzylinders 10 angeordnet. Die Länge der radialen Öffnung 12 entspricht der Länge des Hohlzylinders 10.

Das Unterteilungselement 16 ist im Bereich seiner dem Hohlzylinder 10 zugewandten Endbereiche mit die Spalte zwischen Hohlzylinder 10 und Unterteilungselement 16 überbrückenden Abstreifeinrichtungen 20, insbesondere Gummilippen versehen, die in der durch den Pfeil A veranschaulichten Drehrichtung des Unterteilungselements 16 vorlaufend angeordnet sind.

Angetrieben, d. h. verschwenkt wird das Unterteilungselement 16 durch Drehen der fest mit dem Unterteilungselement 16 verbundenen Achse 14 manuell oder motorisch, insbesondere elektromotorisch.

Beispielsweise in der Ausgangsstellung, wie sie in Figur 2 gezeigt ist, können über die Öffnung 13 in der Mittelkonsole Gegenstände bzw. Utensilien in den zugänglichen Teilstauraum 17 eingelegt werden. Durch Schwenken des Unterteilungselements 16 um 180° in Richtung des Pfeils A wird dieser Teilstauraum 17 mit nach unten geschwenkt und der bis dahin unten befindliche Teilstauraum 18 nach oben geschwenkt, so dass in diesen nun oberen Teilstauraum Gegenstände bzw. Utensilien durch die Öffnung 13 in der Mittelkonsole 1 eingelegt bzw. durch die Öffnung 13 aus diesem Teilstauraum entnommen werden können. Durch weiteres Schwenken des Unterteilungselements 16 um 180° kommt der Teilstauraum 17 wieder oben zu liegen. Die Abstreifeinrichtungen 20 verhindern, dass Gegenstände bzw. Utensilien, die eine geringe Dicke aufweisen, beispielsweise Blätter, in den zwischen dem Unterteilungselement 16 und dem Hohlzylinder 10 gebildeten geringen Spalt gelangen können und damit die Funktionsfähigkeit der beschriebenen Einrichtung beeinträchtigen.

### Bezugszeichenliste

- Mittelkonsole: 1
- Konsolenabschnitt: 2
- obere Fläche: 3
- Konsolenabschnitt: 4
- obere Fläche: 5
- Wählhebel: 6
- Stauraum: 7
- Betätigungsknopf: 8
- Luftaustrittsschlitz: 9
- Hohlzylinder: 10
- Achse: 11
- radiale Öffnung: 12
- Öffnung Konsole: 13
- Achse: 14
- Klappe: 15
- Unterteilungselement: 16
- Teilstauraum: 17
- Teilstauraum: 18
- Wandungsabschnitt: 19
- Abstreifeinrichtung: 20

- Drehrichtung: A

## Patentansprüche

1. Kraftfahrzeug-Innenverkleidungsteil (1) mit einem Stauraum (7), wobei der Stauraum (7) durch das Innere eines Hohlzylinders (10) gebildet ist, dessen Achse (11) waagerecht angeordnet ist, wobei die Enden des Hohlzylinders (10) geschlossen sind und der Hohlzylinder (10) oberhalb dessen Achse (11) eine radiale Öffnung (12) aufweist, wobei innerhalb des Hohlzylinders (10) ein Unterteilungselement (16) angeordnet ist, das das Innere des Hohlzylinders (10) in mindestens zwei Teilstauräume (17, 18) unterteilt, wobei das Unterteilungselement (16) um die Achse (11) des Hohlzylinders (10) drehbar ist, und Wandungsabschnitte (19) des Unterteilungselements (16) radial bis zum Hohlzylinder (10) und axial bis zu den Enden des Hohlzylinders (10) reichen, **dadurch gekennzeichnet, dass** das Unterteilungselement (16) im Bereich seiner dem Hohlzylinder (10) zugewandten Endbereiche mit die Spalte zwischen Hohlzylinder (10) und Unterteilungselement (16) überbrückenden Abstreifeinrichtungen (20) versehen ist.

2. Verkleidungsteil nach Anspruch 1, wobei der jeweilige Wandungsabschnitt (19) plattenförmig ausgebildet ist.

3. Verkleidungsteil nach Anspruch 1 oder 2, wobei das Unterteilungselement (16) zwei Wandungsabschnitte (19) aufweist, die den Stauraum (7) des Hohlzylinders (10) in zwei gleich große Teilstauräume (17, 18) unterteilen.

4. Verkleidungsteil nach Anspruch 3, wobei die beiden Wandungsabschnitte (19) miteinander einen Winkel von 180° einschließen.

5. Verkleidungsteil nach einem der Ansprüche 1 bis 4, wobei das Unterteilungselement (16) eine zentrale Welle (11) aufweist, die manuell oder mittels eines elektrischen Antriebs antreibbar ist.

6. Verkleidungsteil nach einem der Ansprüche 1 bis 5, wobei die radiale Öffnung (12) des Hohlzylinders (10) ein großes Längen-Breiten-Verhältnis aufweist, wobei die Öffnung (12), bezogen auf ihre Längserstreckung, parallel zur Achse (11) des Hohlzylinders (10) angeordnet ist.

7. Verkleidungsteil nach Anspruch 6, wobei die Länge der radialen Öffnung (12) der Länge des Hohlzylinders (10) entspricht.

8. Verkleidungsteil nach Anspruch 6 oder 7, wobei das Längen-Breiten-Verhältnis mindestens 2:1, maximal 5:1 ist.

9. Verkleidungsteil nach einem der Ansprüche 1 bis 8, wobei in den Hohlzylinder (10), benachbart dessen radialer Öffnung (12), eine Klappe (15) zum Abdecken der Öffnung (12) schwenkbar oder verschieblich gelagert ist.

10. Verkleidungsteil nach einem der Ansprüche 1 bis 9, wobei die Abstreifeinrichtungen (20) in Drehrichtung (A) des Unterteilungselements (16) vorlaufend angeordnet sind.

## Claims

1. An interior trim part (1) of a motor vehicle, comprising a storage compartment (7), with the storage compartment (7) being formed by the interior of a hollow cylinder (10) whose axis (11) is arranged horizontally, with the ends of the hollow cylinder (10) being closed and the hollow cylinder (10) having a radial opening (12) above its axis (10), with a subdividing element (16) being arranged within the hollow cylinder (10) which subdivides the interior of the hollow cylinder (10) into at least two partial storage compartments (17, 18), with the subdividing element (16) being rotatable about the axis (11) of the hollow cylinder (10), and the wall sections (19) of the subdividing element (16) extending radially up to the hollow cylinder (10) and axially up to the ends of the hollow cylinder (10), **characterized in that** in the region of its end areas facing the hollow cylinder (10) the subdividing element (16) is provided with stripping devices (20) which bridge the gap between the hollow cylinder (10) and the subdividing element (16).

2. A trim part according to claim 1, wherein the respective wall section (19) is arranged in a plate-shaped manner.

3. A trim part according to claim 1 or 2, wherein the subdividing element (16) comprises two wall sections (19) which subdivide the storage compartment (7) of the hollow cylinder (10) into two equally large partial storage compartments (17, 18).

4. A trim part according to claim 3, wherein the two wall sections (19) together enclose an angle of 180°.

5. A trim part according to one of the claims 1 to 4, wherein the subdividing element (16) comprises a central shaft (11) which can be driven manually or by means of an electric drive.

6. A trim part according to one of the claims 1 to 5, wherein the radial opening (12) of the hollow cylinder (10) has a large length-to-width ratio, with the opening (12), relating to its longitudinal extension, being arranged parallel to the axis (11) of the hollow cylinder (10).

7. A trim part according to claim 6, wherein the length of the radial opening (12) corresponds to the length of the hollow cylinder (10).

8. A trim part according to claim 6 or 7, wherein the length-to-width ratio is at least 2:1, maximally 5:1.

9. A trim part according to one of the claims 1 to 8, wherein a flap (15) for covering the opening (12) is pivotably or displaceably mounted in the hollow cylinder (10), adjacent to its radial opening (12).

10. A trim part according to one of the claims 1 to 9, wherein the stripping devices (20) are arranged to run forward in the rotational direction (A) of the subdividing element (16).

## Revendications

1. Pièce d'habillage intérieur (1) de véhicule à moteur avec un compartiment de rangement (7), dans laquelle le compartiment de rangement (7) est formé par l'intérieur d'un cylindre creux (10) dont l'axe (11) est disposé horizontalement, les extrémités du cylindre creux (10) étant fermées et le cylindre creux (10) présentant au-dessus de son axe (11) une ouverture radiale (12), dans laquelle est disposé à l'intérieur du cylindre creux (10) un élément de cloisonnement (16) qui divise l'intérieur du cylindre creux (10) en au moins deux sous-compartiments de rangement (17, 18), l'élément de cloisonnement (16) étant capable de rotation autour de l'axe (11) du cylindre creux (10) et des sections de paroi (19) de l'élément de cloisonnement (16) s'étendant dans le sens radial jusqu'au cylindre creux (10) et dans le sens axial jusqu'aux extrémités du cylindre creux (10), **caractérisée en ce que** l'élément de cloisonnement (16) est muni au niveau de ses parties d'extrémité tournées vers le cylindre creux (10) de dispositifs racleurs (20) qui comblent l'espace entre le cylindre creux (10) et l'élément de cloisonnement (16).

2. Pièce d'habillage selon la revendication 1, dans laquelle la section de paroi (19) correspondante est en forme de plaque.

3. Pièce d'habillage selon la revendication 1 ou 2, dans laquelle l'élément de cloisonnement (16) présente deux sections de paroi (19) qui partagent le compartiment de rangement (7) du cylindre creux (10) en deux sous-compartiments de rangement (17, 18) de même taille.

4. Pièce d'habillage selon la revendication 3, dans laquelle les deux sections de paroi (19) forment l'une avec l'autre un angle de 180°.

5. Pièce d'habillage selon l'une des revendications 1 à 4, dans laquelle l'élément de cloisonnement (16) présente un arbre central (11) qui peut être entraîné manuellement ou au moyen d'un entraînement électrique.

6. Pièce d'habillage selon l'une des revendications 1 à 5, dans laquelle l'ouverture radiale (12) du cylindre creux (10) présente un grand rapport entre longueur et largeur, l'ouverture (12) étant disposée parallèlement à l'axe (11) du cylindre creux (10) par rapport à son extension longitudinale.

7. Pièce d'habillage selon la revendication 6, dans laquelle la longueur de l'ouverture radiale (12) correspond à la longueur du cylindre creux (10).

8. Pièce d'habillage selon la revendication 6 ou 7, dans laquelle le rapport entre longueur et largeur est d'au moins 2 pour 1 et au maximum de 5 pour 1.

9. Pièce d'habillage selon l'une des revendications 1 à 8, dans laquelle un volet (15) est supporté de façon pivotante ou coulissante dans le cylindre creux (10) au voisinage de son ouverture radiale (12) pour couvrir l'ouverture (12).

10. Pièce d'habillage selon l'une des revendications 1 à 9, dans laquelle les dispositifs racleurs (20) sont disposés de façon à venir devant dans le sens de rotation (A) de l'élément de cloisonnement (16).
